# EUROPÄISCHE PATENTSCHRIFT

(11) **EP 3 074 306 B1**
(45) Veröffentlichungstag und Bekanntmachung des Hinweises auf die Patenterteilung: **10.01.2018**
(21) Anmeldenummer: 14805574.2
(22) Anmeldetag: 27.11.2014
(51) Int. Cl.: B64D 11/06

(54) **FLUGZEUGSITZVORRICHTUNG**
AIRCRAFT SEAT DEVICE
ENSEMBLE SIÈGE D'AVION

(30) Priorität: 29.11.2013 DE 102013113236
(43) Veröffentlichungstag der Anmeldung: 05.10.2016
(73) Patentinhaber: Recaro Aircraft Seating GmbH & Co. KG, 74523 Schwäbisch Hall (DE)
(72) Erfinder: SCHULER, Thomas, 74523 Schwäbisch Hall (DE); HORLACHER, Michael, 74523 Schwäbisch Hall (DE); GÄRTNER, André, 74523 Schwäbisch Hall (DE); MINZER, Heiko, 74523 Schwäbisch Hall (DE); DOBRITZ, Anne, 74523 Schwäbisch Hall (DE)
(74) Vertreter: Daub, Thomas
(86) Internationale Anmeldenummer: PCT/EP2014/075839
(87) Internationale Veröffentlichungsnummer: WO 2015/078979

(56) Entgegenhaltungen:
- DE-A1-102005 027 390
- DE-U1- 20 302 093
- DE-U1-202009 008 901
- US-A- 5 415 457

## Beschreibung

### Stand der Technik

Die Erfindung betrifft eine Flugzeugsitzvorrichtung nach dem Oberbegriff des Patentanspruchs 1 und wie in Dokument DE 202009008901 offenbart wurde. Es ist bereits eine Flugzeugsitzvorrichtung mit zumindest einem Flugzeugsitzelement und mit zumindest einem getrennt von dem Flugzeugsitzelement ausgebildeten Ablage- und/oder Aufbewahrungselement vorgeschlagen worden.

Die Aufgabe der Erfindung besteht insbesondere darin, eine gattungsgemäße Vorrichtung mit verbesserten Eigenschaften hinsichtlich eines Gewichts und eines Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Erfindungsgemäß wird eine Flugzeugsitzvorrichtung mit zumindest einem als eine Rückenlehne ausgebildeten Flugzeugsitzelement, das zumindest einen Teil eines tischfreien Flugzeugsitzes ausbildet, mit zumindest einem getrennt von dem Flugzeugsitzelement ausgebildeten Ablage- und/oder Aufbewahrungselement vorgeschlagen, wobei das Flugzeugsitzelement zumindest eine Schnittstelle aufweist, über die das Ablage- und/oder Aufbewahrungselement bei Bedarf an das Flugzeugsitzelement anbindbar ist, wobei das Ablage- und/oder Aufbewahrungselement als ein Servierelement ausgebildet ist, das eine rechteckige, vieleckige, runde oder ovale flache Platte aufweist. Die flache Platte weist eine Unterseite und eine Oberseite auf, die derart korrespondierend zueinander ausgebildet sind, dass das Ablage- und/oder Aufbewahrungselement dazu vorgesehen ist, zur Aufbewahrung platzsparend gestapelt zu werden. Unter einem "Flugzeugsitzelement" soll dabei insbesondere ein Element verstanden werden, das zumindest einen Teil eines Flugzeugsitzes oder eines Flugzeugsitzbereichs ausbildet, wie vorzugsweise eine Rückenlehne. Grundsätzlich ist es aber auch denkbar, dass das Flugzeugsitzelement als ein anderes Element des Flugzeugsitzes oder des Flugzeugsitzbereichs ausgebildet ist, wie beispielsweise als eine Armlehne oder als eine Kopfstütze. Grundsätzlich ist es auch denkbar, dass das Flugzeugsitzelement als eine Trennwand eines Sitzbereichs, wie sie beispielsweise in einem First-Class- und/oder Business-Class-Bereich eines Flugzeugs vorgesehen ist, ausgebildet ist. Das Flugzeugsitzelement kann aber grundsätzlich auch als eine vor einer ersten Sitzreihe angeordnete Wandung ausgebildet sein, die den Sitzbereich der vordersten Sitzreihe abtrennt. Unter einem "tischfreien Flugzeugsitz" soll dabei insbesondere ein Flugzeugsitz verstanden werden, der in einem voll montierten Zustand keinen an ihm montierten Tisch aufweist. Dabei weist der tischfreie Flugzeugsitz insbesondere keinen an einer Rückseite einer Rückenlehne des Flugzeugsitzes schwenkbar angebrachten Tisch auf. Unter einem "Ablage- und/oder Aufbewahrungselement" soll dabei insbesondere ein Element verstanden werden, das dazu vorgesehen ist, dass ein oder mehrere Elemente sicher auf dem Ablage- und/oder Aufbewahrungselement angeordnet werden können. Dabei sind die Elemente, die auf dem Ablage- und/oder Aufbewahrungselement sicher anordenbar sind, beispielsweise als Getränkegefäße, wie insbesondere Becher, als eingepackte Nahrungsmittel, wie insbesondere Snacks, wie beispielsweise Kekse oder ein Brötchen, und/oder als mobile Geräte, wie beispielsweise ein PED, ausgebildet. Unter einem "PED" soll dabei insbesondere ein elektronisches Gerät, wie beispielsweise ein Tablet PC, verstanden werden. Das Ablage- und/oder Aufbewahrungselement ist dabei vorzugsweise aus einem Kunststoff und/oder einem Zellstoff gebildet. Grundsätzlich ist es auch denkbar, dass das Ablage- und/oder Aufbewahrungselement auch aus einem Metall, wie insbesondere einem Leichtmetall, wie beispielsweise aus einem Aluminium oder einem anderen, dem Fachmann als sinnvoll erscheinenden leichten und stabilen Material gebildet ist. Grundsätzlich ist es auch denkbar, dass das Ablage- und/oder Aufbewahrungselement aus unterschiedlichen Materialien zusammengesetzt ist. Unter der Wendung, dass das "Ablage- und/oder Aufbewahrungselement getrennt von dem Flugzeugsitzelement ausgebildet ist", soll dabei insbesondere verstanden werden, dass das Ablage- und/oder Aufbewahrungselement ein von dem Flugzeugsitzelement separat ausgebildetes Element ist und insbesondere keine stoffschlüssige Verbindung mit dem Flugzeugsitzelement aufweist. Das Ablage- und/oder Aufbewahrungselement ist in einem voll montierten Zustand getrennt von dem Flugzeugsitzelement ausgebildet und kann über einen Form- und/oder Kraftschluss fest mit dem Flugzeugsitzelement verbunden und dann auch wieder zerstörungsfrei von diesem getrennt werden. Dadurch kann ein Ablage- und/oder Aufbewahrungselement vorteilhaft getrennt von dem Flugzeugsitz ausgebildet werden und bei Bedarf einfach an den Flugzeugsitz angebunden werden. Durch eine erfindungsgemäße Ausgestaltung kann insbesondere vorteilhaft ein einfacher und leichter Flugzeugsitz bereitgestellt werden, an dem vorteilhaft ein Ablage- und/oder Aufbewahrungselement angebracht werden kann, sodass ein Passagier bei Bedarf vorteilhaft eine Funktionalität des Ablage- und/oder Aufbewahrungselements nutzen kann.

Weiter wird vorgeschlagen, dass die Schnittstelle zumindest ein Kraft- und/oder Formschlusselement umfasst, über welches das Ablage- und/oder Aufbewahrungselement an das Flugzeugsitzelement anbindbar ist. Unter einem "Kraft- und/oder Formschlusselement" soll dabei insbesondere ein Element verstanden werden, das dazu vorgesehen ist, mit einem korrespondierend ausgebildeten Kraft- und/oder Formschlusselement kraft- und/oder formschlüssig verbunden zu werden, um so insbesondere zwei Elemente, mit denen die Kraft- und/oder Formschlusselemente gekoppelt sind, miteinander zu verbinden. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Darunter, dass das "Ablage- und/oder Aufbewahrungselement anbindbar ist", soll dabei insbesondere verstanden werden, dass das Ablage- und/oder Aufbewahrungselement mit dem Flugzeugsitzelement verbindbar ist, das Ablage- und/oder Aufbewahrungselement aber nicht zwangsläufig an dem Flugzeugsitzelement angebunden sein muss. Dadurch kann die Schnittstelle einfach zur Anbindung des Ablage- und/oder Aufbewahrungselements ausgebildet werden.

Ferner wird vorgeschlagen, dass das Kraft- und/oder Formschlusselement der Schnittstelle als eine Ausnehmung ausgebildet ist, in die das Ablage- und/oder Aufbewahrungselement einsteckbar ist. Unter "einsteckbar" soll dabei insbesondere verstanden werden, dass ein Element, wie insbesondere das Ablage- und/oder Aufbewahrungselement, durch eine Montagebewegung mit dem Kraft- und/oder Formschlusselement koppelbar ist, die zumindest im Wesentlichen in lediglich einer Bewegungsrichtung erfolgt, wobei das Ablage- und/oder Aufbewahrungselement während der Montage dabei in das Kraft- und/oder Formschlusselement eingreift. Dadurch kann die Schnittstelle besonders einfach ausgebildet werden und das Ablage- und/oder Aufbewahrungselement besonders einfach über die Schnittstelle mit dem Flugzeugsitzelement verbunden werden.

Zudem wird vorgeschlagen, dass das Flugzeugsitzelement als eine Rückenlehne ausgebildet ist. Dadurch kann das Flugzeugsitzelement besonders vorteilhaft ausgebildet werden und das Ablage- und/oder Aufbewahrungselement an einer besonders vorteilhaften Stelle an den Flugzeugsitz angebunden werden.

Weiterhin wird vorgeschlagen, dass das Ablage- und/oder Aufbewahrungselement dazu vorgesehen ist, werkzeugfrei an dem Flugzeugsitzelement montiert zu werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "werkzeugfrei montiert zu werden", soll dabei insbesondere verstanden werden, dass das Ablage- und/oder Aufbewahrungselement von einer Person rein händisch an dem Flugzeugsitzelement montierbar ist. Dabei ist das Ablage- und/oder Aufbewahrungselement insbesondere ohne Zuhilfenahme eines Werkzeugs an das Flugzeugsitzelement montierbar. Dadurch kann das Ablage- und/oder Aufbewahrungselement besonders einfach und vorteilhaft, insbesondere von einem Passagier selbst, an dem Flugzeugsitz angebracht werden.

Es wird weiter vorgeschlagen, dass das Ablage- und/oder Aufbewahrungselement zumindest eine Schnittstelle aufweist, die mit der Schnittstelle des Flugzeugsitzelements koppelbar ist. Dadurch kann das Ablage- und/oder Aufbewahrungselement besonders vorteilhaft und einfach zur Montage an dem Flugzeugsitz ausgebildet werden.

Außerdem wird vorgeschlagen, dass das Ablage- und/oder Aufbewahrungselement als ein Servierelement ausgebildet ist. Unter einem "Servierelement" soll dabei insbesondere ein Element, wie insbesondere ein Tablett oder ein Tischelement, verstanden werden, auf dem Gegenstände oder Waren, wie insbesondere Speisen oder Getränke, serviert und während eines Verzehrs platziert werden können. Dadurch kann das Ablage- und/oder Aufbewahrungselement besonders vorteilhaft zum Servieren von Speisen und Getränken ausgebildet werden.

Ferner wird vorgeschlagen, dass das Ablage- und/oder Aufbewahrungselement zumindest eine Aufnahme für ein Getränkegefäß aufweist. Unter einem "Getränkegefäß" soll dabei insbesondere ein Gefäß, wie beispielsweise ein Becher, eine Dose und/oder eine Flasche verstanden werden. Getränkegefäße werden dabei vorzugsweise von einem Flugzeugpersonal während eines Flugs an Passagiere verteilt. Dadurch kann an dem Ablage- und/oder Aufbewahrungselement vorteilhaft ein Getränkegefäß verliersicher angeordnet werden.

Zudem wird vorgeschlagen, dass das Ablage- und/oder Aufbewahrungselement als eine Haltevorrichtung ausgebildet ist. Unter einer "Haltevorrichtung" soll dabei insbesondere eine Vorrichtung verstanden werden, die zur Aufnahme und verliersicheren Anbringung bzw. Aufbewahrung eines dritten Elements vorgesehen ist. Dabei ist die Haltevorrichtung dazu vorgesehen, dass eine Person, wie insbesondere ein Fluggast, ein drittes Element während eines Flugs in der Haltevorrichtung verliersicher verstauen kann. Unter einem "dritten Element" soll dabei insbesondere ein Element verstanden werden, das zur Nutzung durch einen Fluggast vorgesehen ist und/oder das von einem Fluggast während eines Flugs benutzt werden kann, wie insbesondere ein elektronisches Gerät, wie ein PED, oder beispielsweise auch ein Buch. Dadurch kann das Ablage- und/oder Aufbewahrungselement besonders vorteilhaft als Halterung für Gegenstände eines Passagiers, wie beispielsweise eines PEDs, ausgebildet werden und einem Passagier so bei Bedarf vorteilhaft die Möglichkeit bereitgestellt werden, ein entsprechendes Element an dem Flugzeugsitz zu befestigen.

Weiterhin wird vorgeschlagen, dass das Ablage- und/oder Aufbewahrungselement eine Unterseite und eine Oberseite aufweist, die korrespondierend zueinander ausgebildet sind. Unter einer "Oberseite" soll dabei insbesondere eine Seite des Ablage- und/oder Aufbewahrungselements verstanden werden, die in einem an dem Flugzeugsitz montierten Zustand von einer Aufständerebene, auf der der Flugzeugsitz aufgeständert ist, weggerichtet ist. Die Oberseite eines als Servierelement ausgebildeten Ablage- und/oder Aufbewahrungselements ist dabei als eine Tischfläche ausgebildet, auf der die entsprechenden Elemente, wie Speisen und Getränke, platzierbar sind. Unter einer "Unterseite" soll dabei insbesondere eine Seite des Ablage- und/oder Aufbewahrungselements verstanden werden, die in einem an dem Flugzeugsitz montierten Zustand einer Aufständerebene, auf der der Flugzeugsitz aufgeständert ist, zugewandt ist. Darunter, dass die Unterseite und die Oberseite "korrespondierend zueinander ausgebildet sind", soll insbesondere verstanden werden, dass eine Kontur der Oberseite und eine Kontur der Unterseite einander entsprechen, sodass insbesondere zwei gleich ausgebildete Ablage- und/oder Aufbewahrungselemente vorteilhaft aufeinander gestapelt werden können, wobei die Oberseite des einen Ablage- und/oder Aufbewahrungselements formschlüssig in die Unterseite des anderen Ablage- und/oder Aufbewahrungselements eingreift. Dadurch können mehrere Ablage- und/oder Aufbewahrungselemente besonders vorteilhaft und platzsparend gestapelt werden, wodurch insbesondere vorteilhaft viele Ablage- und/oder Aufbewahrungselemente in einem kleinen Raum verstaut werden können.

Es wird weiter vorgeschlagen, dass das Ablage- und/oder Aufbewahrungselement zumindest im Wesentlichen aus einem Kunst- und/oder Zellstoff hergestellt ist. Unter einem "Kunststoff" soll dabei insbesondere ein Kunststoff, wie insbesondere ein Polyamid (PA) oder ein anderer, dem Fachmann als sinnvoll erscheinender Kunststoff, verstanden werden. Dabei ist es denkbar, dass das Ablage- und/oder Aufbewahrungselement aus einem Hochtemperaturkunststoff oder einem faserverstärkten Kunststoff gebildet ist. Unter einem "Zellstoff" soll dabei insbesondere ein Material, das aus Pflanzenfasern hergestellt ist, verstanden werden, wie insbesondere Pappe und/oder Papier. Darunter, dass das "Ablage- und/oder Aufbewahrungselement zumindest im Wesentlichen aus einem Kunst- und/oder Zellstoff hergestellt ist", soll dabei insbesondere verstanden werden, dass das Ablage- und/oder Aufbewahrungselement zumindest zu mehr als 50 %, vorzugsweise zu mehr als 80 % und in einer besonders vorteilhaften Ausgestaltung zu mehr als 95 % entweder aus Kunst- oder Zellstoff gebildet ist. Dabei ist es grundsätzlich auch denkbar, dass das Ablage- und/oder Aufbewahrungselement zu einem Teil aus einem Zellstoff und zu dem restlichen Teil aus Kunststoff gebildet ist. So ist es beispielsweise denkbar, dass das Ablage- und/oder Aufbewahrungselement zum Großteil aus Zellstoff gebildet ist und in bestimmten Bereichen, wie beispielsweise im Bereich der Schnittstelle, zur Verstärkung aus einem Kunststoff. Dadurch kann das Ablage- und/oder Aufbewahrungselement aus einem besonders vorteilhaften Material gebildet werden.

Außerdem wird vorgeschlagen, dass das Ablage- und/oder Aufbewahrungselement dazu vorgesehen ist, lediglich einmal benutzt zu werden. Dadurch kann das Ablage- und/oder Aufbewahrungselement besonders kostengünstig hergestellt werden, da nicht so hochwertige Materialien verwendet werden müssen.

Ferner wird vorgeschlagen, dass die Schnittstelle des Flugzeugsitzelements zumindest eine Ausgleichsvorrichtung umfasst, die dazu vorgesehen ist, das Ablage- und/oder Aufbewahrungselement zumindest teilweise bewegungstechnisch von dem Flugzeugsitzelement zu entkoppeln. Unter einer "Ausgleichsvorrichtung" soll dabei insbesondere eine Vorrichtung verstanden werden, die dazu vorgesehen ist, Bewegungen des Flugzeugsitzes und insbesondere des Flugzeugsitzelements, an dem das Ablage- und/oder Aufbewahrungselement angebracht ist, zu dämpfen, sodass insbesondere Vibrationen und Stöße gegen das Flugzeugsitzelement nicht ungedämpft auf das Ablage- und/oder Aufbewahrungselement übertragen werden und so möglicherweise die auf dem Ablage- und/oder Aufbewahrungselement angeordneten Gegenstände herunterfallen können. Des Weiteren ist es denkbar, dass die Ausgleichsvorrichtung dazu vorgesehen ist, eine Verstellung eines als Rückenlehne ausgebildeten Flugzeugsitzelements auszugleichen. Dabei wird das Ablage- und/oder Aufbewahrungselement vorzugsweise in jeder Stellung des als Rückenlehne ausgebildeten Flugzeugsitzelements in einer gleichen Ausrichtung zu einer Aufständerebene, auf der der Flugzeugsitz aufgeständert ist, gehalten. Dadurch können auf dem Ablage- und/oder Aufbewahrungselement angeordnete Gegenstände besonders sicher aufbewahrt und gegen Stöße geschützt werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung sind sieben Ausführungsbeispiele dargestellt, davon zwei erfindungsgemäß. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugsitzvorrichtung mit einem Flugzeugsitzelement und einem Ablage- und/oder Aufbewahrungselement in einem ersten Ausführungsbeispiel,
- Fig. 2: das Ablage- und/oder Aufbewahrungselement in einem von dem Flugzeugsitzelement getrennten Zustand,
- Fig. 3: eine Detailansicht einer Schnittstelle des Flugzeugsitzelements,
- Fig. 4: eine Transport- und Serviervorrichtung mit mehreren erfindungsgemäßen Ablage- und/oder Aufbewahrungselementen,
- Fig. 5: eine schematische Darstellung einer erfindungsgemäßen Flugzeugsitzvorrichtung mit einem Flugzeugsitzelement und einem Ablage- und/oder Aufbewahrungselement in einem zweiten Ausführungsbeispiel,
- Fig. 6: eine schematische Darstellung einer Flugzeugsitzvorrichtung mit einem Flugzeugsitzelement und einem als Haltevorrichtung ausgebildeten Ablage- und/oder Aufbewahrungselement in einem dritten Ausführungsbeispiel,
- Fig. 7: eine schematische Darstellung einer Flugzeugsitzvorrichtung mit einem Flugzeugsitzelement und einem Ablage- und/oder Aufbewahrungselement in einem vierten Ausführungsbeispiel,
- Fig. 8: eine schematische Darstellung einer Flugzeugsitzvorrichtung mit einem Flugzeugsitzelement und einem Ablage- und/oder Aufbewahrungselement in einem fünften Ausführungsbeispiel,
- Fig. 9: eine schematische Darstellung einer Flugzeugsitzvorrichtung mit einem Flugzeugsitzelement und einem Ablage- und/oder Aufbewahrungselement in einem sechsten Ausführungsbeispiel und
- Fig. 10: eine schematische Darstellung einer Flugzeugsitzvorrichtung mit einem Flugzeugsitzelement und einem Ablage- und/oder Aufbewahrungselement in einem siebten Ausführungsbeispiel.

### Beschreibung der Ausführungsbeispiele

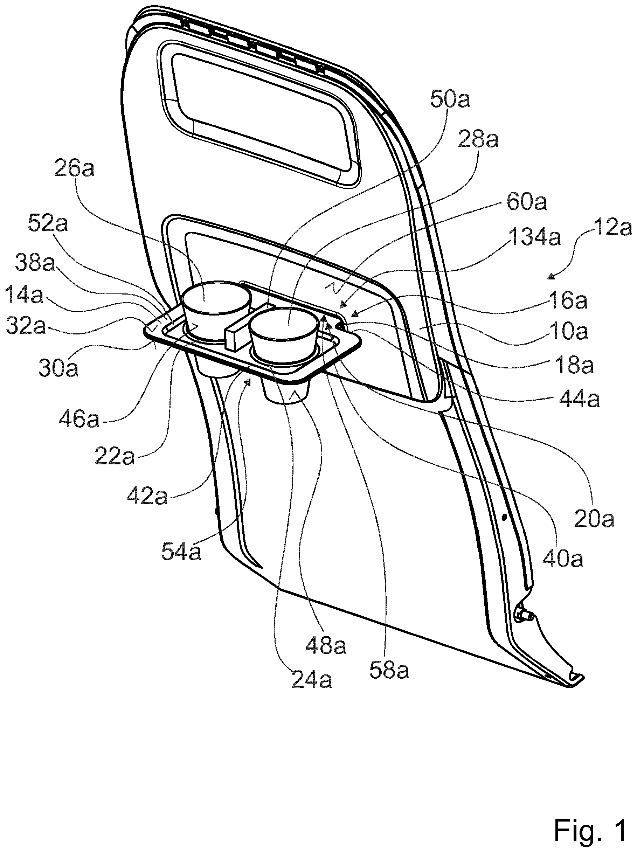

Die Figuren 1 bis 4 zeigen ein erstes Ausführungsbeispiel einer erfindungsgemäßen Flugzeugsitzvorrichtung. Die Flugzeugsitzvorrichtung umfasst einen Flugzeugsitz 12a. Der Flugzeugsitz 12a ist als ein Sitz ausgebildet, der dazu vorgesehen ist, dass ein Flugzeugpassagier während eines Flugs darin sitzt. Der Flugzeugsitz 12a ist in einem nicht näher dargestellten Flugzeug aufgeständert. Dazu weist der Flugzeugsitz 12a eine nicht näher dargestellte Aufständervorrichtung auf, über die der Flugzeugsitz 12a auf einer Aufständerebene aufgeständert ist. Die Aufständerebene ist dabei von einem Kabinenboden des Flugzeugs ausgebildet. Die Flugzeugsitzvorrichtung umfasst ein Flugzeugsitzelement 10a. Das Flugzeugsitzelement 10a bildet einen Teil des Flugzeugsitzes 12a aus. Das Flugzeugsitzelement 10a ist dabei als eine Rückenlehne ausgebildet. Grundsätzlich ist es auch denkbar, dass das Flugzeugsitzelement 10a als ein anderes Element der Flugzeugsitzvorrichtung ausgebildet ist, wie beispielsweise eine Armlehne, eine Kopfstütze, eine Fußablage oder eine Konsole, an der weitere Elemente, wie beispielsweise ein Bildschirm oder Ablagemöglichkeiten, angebracht sind.

Der Flugzeugsitz 12a ist dabei tischfrei ausgebildet. Der Flugzeugsitz 12a weist keinen an dem Flugzeugsitz 12a fest angeordneten Tisch auf. An dem als Rückenlehne ausgebildeten Flugzeugsitzelement 10a ist kein, wie aus dem Stand der Technik bekannter Tisch angeordnet, der beispielsweise schwenkbar an der Rückenlehne angeordnet werden kann. Das als Rückenlehne ausgebildete Flugzeugsitzelement 10a weist eine Rückseite 60a auf, die einem hinter dem Flugzeugsitz 12a angeordneten weiteren Flugzeugsitz zugewandt ist.

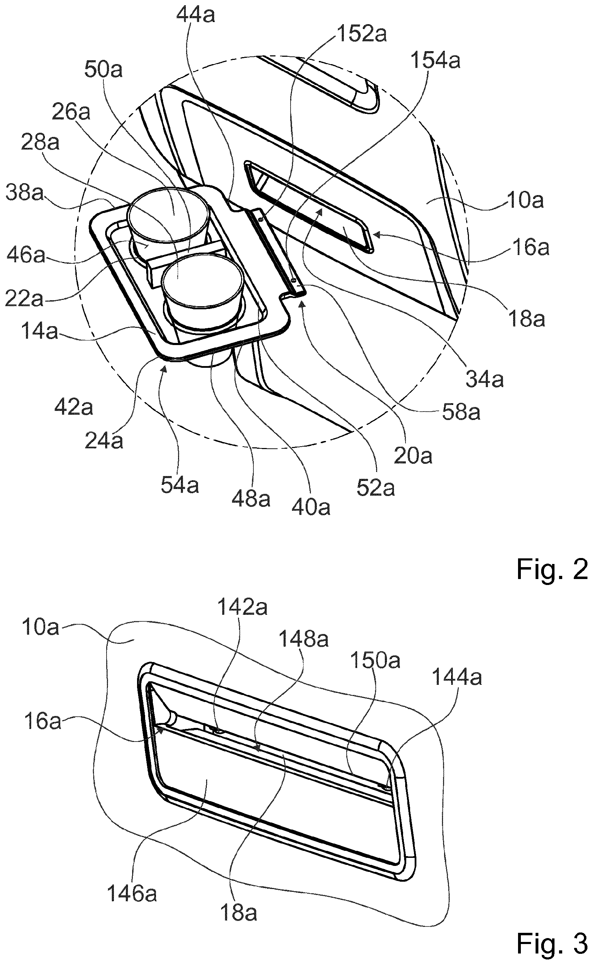

Die Flugzeugsitzvorrichtung umfasst ein Ablage- und/oder Aufbewahrungselement 14a. Das Ablage- und/oder Aufbewahrungselement 14a ist getrennt von dem Flugzeugsitzelement 10a ausgebildet. Das Ablage- und/oder Aufbewahrungselement 14a ist aus einem Kunststoff gebildet. Das Ablage- und/oder Aufbewahrungselement 14a ist bei Bedarf an das Flugzeugsitzelement 10a anbindbar. Das Ablage- und/oder Aufbewahrungselement 14a ist als ein Servierelement ausgebildet. Das als Servierelement ausgebildete Ablage- und/oder Aufbewahrungselement 14a ist dazu vorgesehen, dass Getränke und/oder Speisen auf ihm abgestellt und serviert werden können. Das Ablage- und/oder Aufbewahrungselement 14a ist als eine rechteckige, flache Platte ausgebildet. Grundsätzlich ist es dabei auch denkbar, dass das Ablage- und/oder Aufbewahrungselement 14a eine andere vieleckige, runde oder ovale Form aufweist. Das Ablage- und/oder Aufbewahrungselement 14a weist dabei zwei kurze Seitenkanten 38a, 40a und jeweils eine lange Vorderkante 42a bzw. eine Hinterkante 44a auf. Die Hinterkante 44a ist dabei in einem an dem Flugzeugsitzelement 10a angebundenen Zustand dem Flugzeugsitzelement 10a zugewandt. Das Ablage- und/oder Aufbewahrungselement 14a weist eine Oberseite 32a auf. Die Oberseite 32a des Ablage- und/oder Aufbewahrungselements 14a ist als eine Tischfläche ausgebildet. Auf der Tischfläche können Getränke und/oder Speisen abgestellt bzw. angebracht werden. Dazu weist das Ablage- und/oder Aufbewahrungselement 14a zwei Aufnahmen 22a, 24a auf. Die Aufnahmen 22a, 24a sind als Durchgangslöcher ausgebildet, die sich von der Oberseite 32a bis an eine Unterseite 30a des Ablage- und/oder Aufbewahrungselements 14a erstrecken. Die Aufnahmen 22a, 24a sind kreisrund ausgebildet. Die Aufnahmen 22a, 24a sind beabstandet zueinander angeordnet. Die Aufnahmen 22a, 24a sind dazu vorgesehen, dass ein Getränkegefäß 26a, 28a darin angeordnet werden kann. Ein Getränkegefäß 26a, 28a, wie beispielsweise ein Becher, kann mit seiner Unterseite 30a, die einen Durchmesser aufweist, der kleiner ist als ein Durchmesser der entsprechenden Aufnahme 22a, 24a, von der Oberseite 32a des Ablage- und/oder Aufbewahrungselements 14a in die Aufnahme 22a, 24a eingeführt werden. Der Durchmesser des Getränkegefäßes 26a, 28a vergrößert sich nach oben hin und wird zum oberen Rand des Getränkegefäßes 26a, 28a größer als der Durchmesser der entsprechenden Aufnahme 22a, 24a. Ist das Getränkegefäß 26a, 28a so weit in die entsprechende Aufnahme 22a, 24a eingeführt, dass das Getränkegefäß 26a, 28a mit seiner Außenwandung 46a, 48a an der entsprechenden Aufnahme 22a, 24a anliegt, ist das Getränkegefäß 26a, 28a in der entsprechenden Aufnahme 22a, 24a formschlüssig befestigt. Grundsätzlich ist es denkbar, dass die beiden Aufnahmen 22a, 24a unterschiedlich große Durchmesser aufweisen, sodass unterschiedlich große Getränkegefäße 26a, 28a oder andere Elemente darin angeordnet werden können. Grundsätzlich ist es auch denkbar, dass in den Aufnahmen 22a, 24a auch andere Elemente, wie beispielsweise Schalen oder andere Aufbewahrungselemente, angeordnet werden können, in denen beispielsweise Snacks, wie Nüsse oder Ähnliches, aufbewahrt werden können. Wie in Figur 1 und 2 zu sehen, ist ein Bereich zwischen den beiden Aufnahmen 22a, 24a dazu vorgesehen, dass ein verpackter Snack 50a darin zum Servieren angeordnet wird. Dazu ist es denkbar, dass in dem Bereich zwischen den beiden Aufnahmen 22a, 24a eine Mulde angeordnet ist, in der ein verpackter Snack 50a anordenbar ist. Grundsätzlich ist es beispielsweise auch denkbar, dass das Ablage- und/oder Aufbewahrungselement 14a lediglich eine Aufnahme 22a, 24a aufweist und der gesamte Bereich neben der einen Aufnahme 22a, 24a dazu vorgesehen ist, dass eine Speise oder ein Snack 50a darauf angeordnet werden kann. Dabei ist es denkbar, dass das Ablage- und/oder Aufbewahrungselement 14a eine Aufnahme 22a, 24a zur Anbringung eines Getränkegefäßes 26a, 28a und eine Mulde, in der eine Speise oder ein Snack 50a angeordnet werden kann, aufweist.

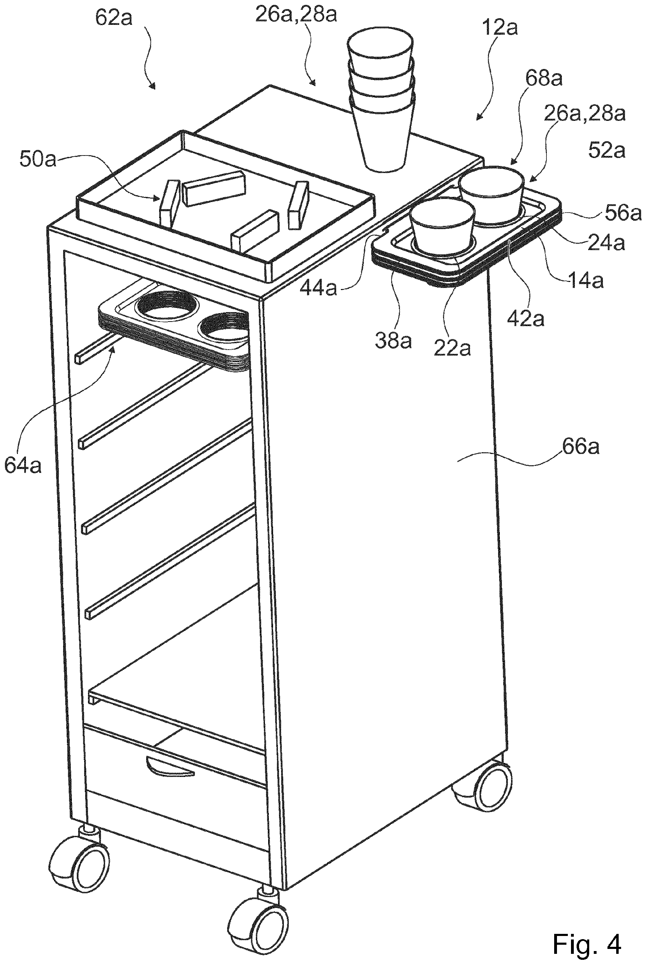

Das Ablage- und/oder Aufbewahrungselement 14a ist dazu vorgesehen, zur Aufbewahrung platzsparend gestapelt zu werden. Dazu sind die Oberseite 32a und die Unterseite 30a des Ablage- und/oder Aufbewahrungselements 14a korrespondierend zueinander ausgebildet. Eine Kontur der Unterseite 30a des Ablage- und/oder Aufbewahrungselements 14a entspricht einer Kontur der Oberseite 32a des Ablage- und/oder Aufbewahrungselements 14a. Die Oberseite 32a des Ablage- und/oder Aufbewahrungselements 14a weist eine Mulde 52a auf, die die beiden Aufnahmen 22a, 24a umschließt. Die Mulde 52a weist einen gleichen Umriss auf wie das gesamte Ablage- und/oder Aufbewahrungselement 14a. Grundsätzlich ist es auch denkbar, dass die Mulde 52a einen anderen Umriss aufweist, kleiner ist und/oder die Aufnahmen 22a, 24a nicht in der Mulde 52a angeordnet sind. Die Unterseite 30a des Ablage- und/oder Aufbewahrungselements 14a weist eine Erhebung 54a auf, die der Mulde 52a auf der Oberseite 32a des Ablage- und/oder Aufbewahrungselements 14a entspricht. Eine Höhe der Erhebung 54a auf der Unterseite 30a ist dabei etwas kleiner als eine Tiefe der Mulde 52a auf der Oberseite 32a. Dadurch kann ein weiteres Ablage- und/oder Aufbewahrungselement 56a, das im Wesentlichen identisch ausgebildet ist, mit seiner Unterseite 30a auf die Oberseite 32a des Ablage- und/oder Aufbewahrungselements 14a aufgelegt werden. Eine Erhebung des weiteren Ablage- und/oder Aufbewahrungselements 56a ist dabei in der Mulde 52a des unter ihm angeordneten Ablage- und/oder Aufbewahrungselements 14a angeordnet, wodurch eine formschlüssige Verbindung zwischen den beiden Ablage- und/oder Aufbewahrungselementen 14a, 56a entsteht und diese dadurch zueinander fest positioniert sind. Dabei liegen die beiden Ablage- und/oder Aufbewahrungselemente 14a, 56a eben aufeinander. Wie in Figur 4 zu sehen, können so mehrere Ablage- und/oder Aufbewahrungselemente 14a, 56a übereinander gestapelt werden, wobei das oben liegende Ablage- und/oder Aufbewahrungselement 14a, 56a jeweils mit seiner Unterseite 30a auf einer Oberseite 32a des entsprechenden darunter liegenden Ablage- und/oder Aufbewahrungselements 14a, 56a eben aufliegt.

Das Ablage- und/oder Aufbewahrungselement 14a ist dazu vorgesehen, werkzeugfrei an dem Flugzeugsitzelement 10a montiert zu werden. Zu einer Anbindung an das Flugzeugsitzelement 10a ist dabei kein Werkzeug nötig. Das Ablage- und/oder Aufbewahrungselement 14a ist rein händisch an dem Flugzeugsitzelement 10a, also dem Flugzeugsitz 12a, anbringbar. Zur werkzeugfreien Anbindung des Ablage- und/oder Aufbewahrungselements 14a an den Flugzeugsitz 12a umfasst das Flugzeugsitzelement 10a eine Schnittstelle 16a. Über die Schnittstelle 16a ist das Ablage- und/oder Aufbewahrungselement 14a fest an das Flugzeugsitzelement 10a anbindbar. Die Schnittstelle 16a umfasst ein Kraft- und/oder Formschlusselement 18a, über welches das Ablage- und/oder Aufbewahrungselement 14a an das Flugzeugsitzelement 10a anbindbar ist. Über das Kraft- und/oder Formschlusselement 18a ist das Ablage- und/oder Aufbewahrungselement 14a formschlüssig an das Flugzeugsitzelement 10a anbindbar. Grundsätzlich ist es auch denkbar, dass das Ablage- und/oder Aufbewahrungselement 14a über einen Kraftschluss mit dem Flugzeugsitzelement 10a verbindbar ist. Dabei wäre es denkbar, dass das Ablage- und/oder Aufbewahrungselement 14a zu einer kraftschlüssigen Verbindung mit dem Flugzeugsitzelement 10a in die Schnittstelle 16a des Flugzeugsitzelements 10a geklemmt wird. Grundsätzlich ist auch eine Kombination aus einem Form- und Kraftschluss zur Anbindung des Ablage- und/oder Aufbewahrungselements 14a an das Flugzeugsitzelement 10a denkbar. Das Kraft- und/oder Formschlusselement 18a der Schnittstelle 16a ist als eine Ausnehmung ausgebildet. In das als Ausnehmung ausgebildete Kraft- und/oder Formschlusselement 18a ist das Ablage- und/oder Aufbewahrungselement 14a einsteckbar. In einem Zustand, in dem das Ablage- und/oder Aufbewahrungselement 14a in das als Ausnehmung ausgebildete Kraft- und/oder Formschlusselement 18a eingesteckt ist, ist das Ablage- und/oder Aufbewahrungselement 14a formschlüssig mit der Schnittstelle 16a gekoppelt.

In Figur 3 ist eine Detailansicht der Schnittstelle 16a des Flugzeugsitzelements 10a dargestellt. Das als Ausnehmung ausgebildete Kraft- und/oder Formschlusselement 18a bildet hinter einer vorderen Wandung 146a einen Hinterschnitt 148a aus. Eine obere Wandung 150a des als Ausnehmung ausgebildeten Kraft- und/oder Formschlusselements 18a erstreckt sich bis unter eine Oberkante der vorderen Wandung 146a. Die Schnittstelle 16a umfasst zwei Fixierelemente 142a, 144a. Die Fixierelemente 142a, 144a sind in die obere Wandung 150a eingebracht. Die Fixierelemente 142a, 144a sind als federbelastete Druckstifte ausgebildet, die nach unten in das als Ausnehmung ausgebildete Kraft- und/oder Formschlusselement 18a hineinragen. Entgegen einer Federkraft können die als Druckstifte ausgebildeten Fixierelemente 142a, 144a in Richtung der oberen Wandung 150a bewegt werden. Die Fixierelemente 142a, 144a sind dazu vorgesehen, das Ablage- und/oder Aufbewahrungselement 14a in einem in dem als Ausnehmung ausgebildeten Kraft- und/oder Formschlusselement 18a angeordneten Zustand zu fixieren. Dazu üben die Fixierelemente 142a, 144a eine Kraft auf das Ablage- und/oder Aufbewahrungselement 14a aus, wenn dieses korrekt in dem als Ausnehmung ausgebildeten Kraft- und/oder Formschlusselement 18a angebracht ist. Grundsätzlich ist es auch denkbar, dass die Fixierelemente 142a, 144a als Magnete oder anders ausgebildete Druckstücke ausgebildet sind.

Zur Anbindung an das Flugzeugsitzelement 10a weist das Ablage- und/oder Aufbewahrungselement 14a eine Schnittstelle 20a auf. Die Schnittstelle 20a des Ablage- und/oder Aufbewahrungselements 14a ist mit der Schnittstelle 16a des Flugzeugsitzelements 10a koppelbar. Über die Kopplung der beiden Schnittstellen 16a, 20a ist das Ablage- und/oder Aufbewahrungselement 14a an das Flugzeugsitzelement 10a anbindbar. Die Schnittstelle 20a des Ablage- und/oder Aufbewahrungselements 14a ist an der Hinterkante 44a des Ablage- und/oder Aufbewahrungselements 14a angeordnet. Die Schnittstelle 20a bildet ein Kraft- und/oder Formschlusselement 58a aus. Das Kraft- und/oder Formschlusselement 58a ist als eine Lasche ausgebildet, die sich von der Hinterkante 44a des Ablage- und/oder Aufbewahrungselements 14a aus von der Vorderkante 42a wegerstreckt. Das als Lasche ausgebildete Kraft- und/oder Formschlusselement 58a bildet einen Hinterschnitt aus, mit dem das Kraft- und/oder Formschlusselement 58a in das als Ausnehmung ausgebildete Kraft- und/oder Formschlusselement 18a der Schnittstelle 16a des Flugzeugsitzelements 10a formschlüssig eingreift. In einem von der Hinterkante 44a des Ablage- und/oder Aufbewahrungselements 14a abgewandten Ende erstreckt sich das als Lasche ausgebildete Kraft- und/oder Formschlusselement 58a nach unten in Richtung der Unterseite 30a des Ablage- und/oder Aufbewahrungselements 14a. Dabei ist es denkbar, dass sich das als Lasche ausgebildete Kraft- und/oder Formschlusselement 58a nach unten über die Unterseite 30a des Ablage- und/oder Aufbewahrungselements 14a erstreckt. Grundsätzlich ist es auch denkbar, dass das Kraft- und/oder Formschlusselement 58a der Schnittstelle 20a in einer anderen, dem Fachmann als sinnvoll erscheinenden Art und Weise ausgestaltet ist und/oder dass die Schnittstelle 20a mehrere Kraft- und/oder Formschlusselemente 58a umfasst. Zur Verbindung des Ablage- und/oder Aufbewahrungselements 14a mit dem Flugzeugsitzelement 10a wird das als Lasche ausgebildete Kraft- und/oder Formschlusselement 58a des Ablage- und/oder Aufbewahrungselements 14a in das als Ausnehmung ausgebildete Kraft- und/oder Formschlusselement 18a des Flugzeugsitzelements 10a eingeführt und formschlüssig damit verbunden. Zur Fixierung des Ablage- und/oder Aufbewahrungselements 14a drücken die Fixierelemente 142a, 144a in einem Zustand, in dem das als Lasche ausgebildete Kraft- und/oder Formschlusselement 58a des Ablage- und/oder Aufbewahrungselements 14a in das als Ausnehmung ausgebildete Kraft- und/oder Formschlusselement 18a des Flugzeugsitzelements 10a eingeführt ist, auf das als Lasche ausgebildete Kraft- und/oder Formschlusselement 58a und verspannen das Ablage- und/oder Aufbewahrungselement 14a in der Schnittstelle 16a. Zur Verbindung mit den Fixierelementen 142a, 144a weist das als Lasche ausgebildete Kraft- und/oder Formschlusselement 58a des Ablage- und/oder Aufbewahrungselements 14a Aufnahmen 152a, 154a auf. Die Fixierelemente 142a, 144a greifen zur Fixierung des Ablage- und/oder Aufbewahrungselements 14a in die Aufnahmen 152a, 154a ein. Bei einer Anbindung des Ablage- und/oder Aufbewahrungselements 14a in der Schnittstelle 16a des Flugzeugsitzelements 10a werden die Fixierelemente 142a, 144a beim Einführen des als Lasche ausgebildeten Kraft- und/oder Formschlusselements 58a in das als Ausnehmung ausgebildete Kraft- und/oder Formschlusselement 18a gegen ihre Federkraft ausgelenkt und rasten beim Erreichen einer korrekt angebrachten Stellung in die Aufnahmen 152a, 154a ein und drücken das Ablage- und/oder Aufbewahrungselement 14a im Bereich des als Lasche ausgebildeten Kraft- und/oder Formschlusselements 58a nach unten und verspannen das Ablage- und/oder Aufbewahrungselement 14a so in der Schnittstelle 16a. Sind die Fixierelemente 142a, 144a als Magnete ausgebildet, weist das als Lasche ausgebildete Kraft- und/oder Formschlusselement 58a des Ablage- und/oder Aufbewahrungselements 14a statt der Aufnahmen 152a, 154a ebenfalls Magnete auf, die sich in einem Zustand, in dem das Ablage- und/oder Aufbewahrungselement 14a korrekt in der Schnittstelle 16a angeordnet ist, mit den als Magneten ausgebildeten Fixierelementen 142a, 144a magnetisch verbinden. Grundsätzlich ist es dabei denkbar, dass das Kraft- und/oder Formschlusselement 58a des Ablage- und/oder Aufbewahrungselements 14a für eine besonders feste und sichere Verbindung in das als Ausnehmung ausgebildete Kraft- und/oder Formschlusselement 18a des Flugzeugsitzelements 10a eingeklemmt wird.

Die Schnittstelle 16a des Flugzeugsitzelements 10a weist eine Ausgleichsvorrichtung 34a auf. Die Ausgleichsvorrichtung 34a ist dazu vorgesehen, das Ablage- und/oder Aufbewahrungselement 14a zumindest teilweise bewegungstechnisch von dem Flugzeugsitzelement 10a zu entkoppeln. Die Ausgleichsvorrichtung 34a dämpft eine Bewegung des Ablage- und/oder Aufbewahrungselements 14a bei einer Bewegung des Flugzeugsitzelements 10a. Dazu weist die Ausgleichsvorrichtung 34a eine nicht näher dargestellte Feder-Dämpfervorrichtung auf. Dadurch werden Bewegungen des Flugzeugsitzelements 10a, die beispielsweise durch Vibrationen des Flugzeugs oder durch ein Stoßen an das Flugzeugsitzelement 10a erzeugt werden, nicht ungedämpft an das Ablage- und/oder Aufbewahrungselement 14a weitergeleitet. So kann eine Gefahr des Verschüttens von auf dem Ablage- und/oder Aufbewahrungselement 14a angeordneten Getränkegefäßen 26a, 28a vorteilhaft verringert werden.

In Figur 4 ist schematisch eine Transport- und Serviervorrichtung 62a abgebildet. Die Transport- und Serviervorrichtung 62a ist als ein schiebbarer Container ausgebildet und ist dazu vorgesehen, dass in und auf ihm Getränke und Speisen aufbewahrt sind, die während eines Flugs von Crewmitgliedern an Passagiere ausgegeben werden. Die Transport- und Serviervorrichtung 62a weist eine Aufnahmevorrichtung 64a auf. Die Aufnahmevorrichtung 64a ist beispielsweise als Öffnung ausgebildet. Die Aufnahmevorrichtung 64a ist dazu vorgesehen, dass mehrere Ablage- und/oder Aufbewahrungselemente 14a, 56a darin zum Transport angeordnet werden können. Die Aufnahmevorrichtung 64a ist dabei in einem oberen Bereich der Transport- und Serviervorrichtung 62a angeordnet. Dabei können so viele Ablage- und/oder Aufbewahrungselemente 14a, 56a darin angeordnet werden, wie es Flugzeugsitze gibt, die mittels der Transport- und Serviervorrichtung 62a bedient werden. In der Aufnahmevorrichtung 64a sind die Ablage- und/oder Aufbewahrungselemente 14a, 56a platzsparend übereinander gestapelt. Die Ablage- und/oder Aufbewahrungselemente 14a, 56a können dabei einfach von einer Person aus der Aufnahmevorrichtung 64a entnommen werden. Die Transport- und Serviervorrichtung 62a weist an einer Seitenwand 66a eine Aufnahme 68a auf. Die Aufnahme 68a ist dazu vorgesehen, dass mehrere Ablage- und/oder Aufbewahrungselemente 14a, 56a außen an der Transport- und Serviervorrichtung 62a angebracht werden können. Die Ablage- und/oder Aufbewahrungselemente 14a, 56a können dabei, während sie an der Aufnahme 68a der Transport- und Serviervorrichtung 62a angebracht sind, mit Getränkegefäßen 26a, 28a, Speisen und/oder anderen Elementen bestückt werden. Nachdem ein Ablage- und/oder Aufbewahrungselement 14a an der Aufnahme 68a der Transport- und Serviervorrichtung 62a von einem Crewmitglied mit den entsprechenden, von einem Fluggast gewünschten Getränken und/oder Speisen bestückt worden ist, wird das Ablage- und/oder Aufbewahrungselement 14a an den Fluggast übergeben, der das Ablage- und/oder Aufbewahrungselement 14a dann mit der Schnittstelle 20a an die Schnittstelle 16a des Flugzeugsitzelements 10a des vor ihm angeordneten Flugzeugsitzes 12a anbindet. Die Getränkegefäße 26a, 28a und/oder Speisen sind dadurch sicher und fest an dem vorderen Flugzeugsitz 12a angeordnet. Fluggäste, die keine Getränke oder Speisen wünschen, erhalten kein Ablage- und/oder Aufbewahrungselement 14a. Die Ablage- und/oder Aufbewahrungselemente 14a, 56a können dabei von einem Crewmitglied einfach mit mehreren Getränkegefäßen 26a, 28a und/oder einer Speise bestückt und dem Fluggast übergeben werden. Dadurch können vorteilhaft und einfach mehrere Getränkegefäße 26a, 28a und/oder Speisen zusammen an einen Fluggast übergeben werden. Im Gegensatz zu einem System ohne Ablage- und/oder Aufbewahrungselemente 14a, 56a, bei dem jedes Getränkegefäß und/oder jede Speise einzeln oder Getränkegefäße und/oder Speisen nur schwer zusammen an den Fluggast übergeben werden können, ist das vorgeschlagene System mit den Ablage- und/oder Aufbewahrungselementen 14a, 56a zeitsparend und erhöht einen Komfort für die Fluggäste. Werden die Ablage- und/oder Aufbewahrungselemente 14a, 56a wieder eingesammelt, können die Ablage- und/oder Aufbewahrungselemente 14a, 56a von den Fluggästen selbstständig wieder aus der Schnittstelle 16a des Flugzeugsitzelements 10a des entsprechenden Flugzeugsitzes 12a entfernt werden und an ein Crewmitglied übergeben werden. Die Ablage- und/oder Aufbewahrungselemente 14a, 56a mit den eventuell noch darin befindlichen Getränkegefäßen 26a, 28a und/oder Verpackungsmaterialien können dann zusammen in einem Behälter verstaut oder entsorgt werden oder die Ablage- und/oder Aufbewahrungselemente 14a, 56a können direkt wieder in die Aufnahmevorrichtung der Transport- und Serviervorrichtung 62a eingeordnet werden. Grundsätzlich sind auch andere Aufbewahrungen der Ablage- und/oder Aufbewahrungselemente 14a, 56a in der Transport- und Serviervorrichtung 62a denkbar. Dabei ist es beispielsweise denkbar, dass die Transport- und Serviervorrichtung 62a eine Zuführung aufweist, die die Ablage- und/oder Aufbewahrungselemente 14a, 56a automatisch zu einer Entnahmeöffnung fördert. Die Entnahmeöffnung wäre dabei beispielsweise an einer Oberseite der Transport- und Serviervorrichtung 62a angeordnet, wobei die Ablage- und/oder Aufbewahrungselemente 14a, 56a in einer Aufnahme unterhalb der Entnahmeöffnung angeordnet sind. Dabei ist eine Federvorrichtung in der Aufnahme unterhalb der Entnahmeöffnung angeordnet, die die Ablage- und/oder Aufbewahrungselemente 14a, 56a in Richtung der Entnahmeöffnung drückt. Dadurch wird das nächste Aufbewahrungselement 14a, 56a automatisch zur Entnahme in die Entnahmeöffnung gedrückt, sobald das oberste Aufbewahrungselement 14a, 56a aus der Entnahmeöffnung entnommen wird.

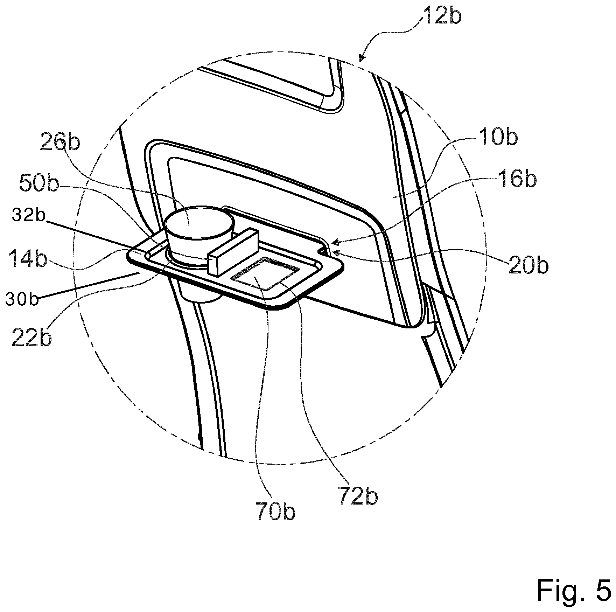

In Fig. 5 bis 10 sind sechs weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 4, verwiesen werden kann. Zur Unterscheidung der Ausführungsbeispiele ist der Buchstabe a den Bezugszeichen des Ausführungsbeispiels in Fig. 1 bis 4 nachgestellt. In den Ausführungsbeispielen der Fig. 5 bis 10 ist der Buchstabe a durch die Buchstaben b bis g ersetzt.

Figur 5 zeigt ein zweites Ausführungsbeispiel einer erfindungsgemäßen Flugzeugsitzvorrichtung. Die Flugzeugsitzvorrichtung umfasst einen Flugzeugsitz 12b und ein Flugzeugsitzelement 10b. Das Flugzeugsitzelement 10b bildet einen Teil des Flugzeugsitzes 12b aus. Das Flugzeugsitzelement 10b ist dabei als eine Rückenlehne ausgebildet. Der Flugzeugsitz 12b ist im Wesentlichen gleich ausgebildet wie der entsprechende Flugzeugsitz aus dem ersten Ausführungsbeispiel. Der Flugzeugsitz 12b ist dabei tischfrei ausgebildet und weist eine Schnittstelle 16b auf, die der aus dem ersten Ausführungsbeispiel der Figuren 1 bis 4 entspricht.

Die Flugzeugsitzvorrichtung umfasst ein Ablage- und/oder Aufbewahrungselement 14b. Das Ablage- und/oder Aufbewahrungselement 14b ist getrennt von dem Flugzeugsitzelement 10b ausgebildet. Das Ablage- und/oder Aufbewahrungselement 14b ist bei Bedarf an das Flugzeugsitzelement 10b anbindbar. Das Ablage- und/oder Aufbewahrungselement 14b weist eine Oberseite 32b auf. Die Oberseite 32b des Ablage- und/oder Aufbewahrungselements 14b ist als eine Tischfläche ausgebildet. Das Ablage- und/oder Aufbewahrungselement 14b weist eine im Wesentlichen gleiche Grundform zu dem ersten Ausführungsbeispiel auf. Im Unterschied zu dem ersten Ausführungsbeispiel umfasst das Ablage- und/oder Aufbewahrungselement 14b lediglich eine Aufnahme 22b, in der ein Getränkegefäß 26b, 28b angeordnet werden kann. In einem Bereich neben der Aufnahme 22b bildet das Ablage- und/oder Aufbewahrungselement 14b eine Ablagefläche 70b aus. Auf der Ablagefläche 70b können beispielsweise Speisen abgestellt werden. Grundsätzlich wäre es auch denkbar, dass das Ablage- und/oder Aufbewahrungselement 14b lediglich eine Aufnahme 22b für das Getränkegefäß 26b und keine zusätzliche Ablagefläche 70b aufweist, wodurch das Ablage- und/oder Aufbewahrungselement 14b im Vergleich zu der gezeigten Ausgestaltung lediglich halb so groß wäre. In einem Bereich der Ablagefläche 70b weist das Ablage- und/oder Aufbewahrungselement 14b einen Druckbereich 72b auf. In dem Druckbereich 72b kann beispielsweise eine Werbung oder ein Logo der Airline aufgedruckt werden. Grundsätzlich ist es auch denkbar, dass auf dem Druckbereich 72b eine speziell für den Passagier personalisierte Nachricht aufgedruckt ist. Das Ablage- und/oder Aufbewahrungselement 14b ist aus einem Zellstoff hergestellt. Dabei ist das Ablage- und/oder Aufbewahrungselement 14b aus Pappe gebildet. In einem Bereich einer Schnittstelle 20b ist das Ablage- und/oder Aufbewahrungselement 14b mit einem Kunststoff verstärkt. Das Ablage- und/oder Aufbewahrungselement 14b ist dabei dazu vorgesehen, lediglich einmal verwendet zu werden. Das Ablage- und/oder Aufbewahrungselement 14b wird nach Benutzung durch den Fluggast zusammen mit den verwendeten Getränkegefäßen 26b sowie eventuellen Verpackungsmaterialien entsorgt. Das Ablage- und/oder Aufbewahrungselement 14b kann dadurch besonders vorteilhaft günstig hergestellt werden.

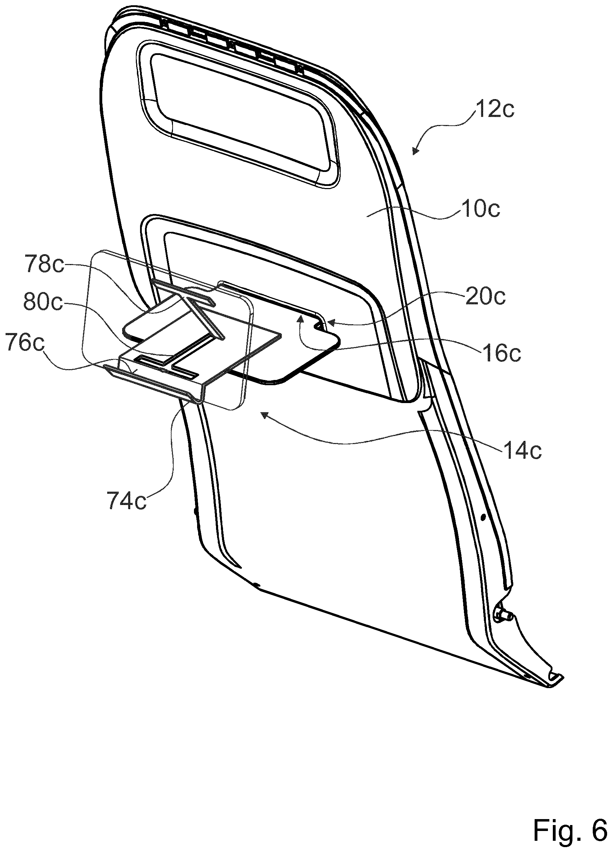

Figur 6 zeigt ein drittes Ausführungsbeispiel einer Flugzeugsitzvorrichtung. Die Flugzeugsitzvorrichtung umfasst einen Flugzeugsitz 12c und ein Flugzeugsitzelement 10c. Das Flugzeugsitzelement 10c bildet einen Teil des Flugzeugsitzes 12c aus. Das Flugzeugsitzelement 10c ist dabei als eine Rückenlehne ausgebildet. Der Flugzeugsitz 12c ist im Wesentlichen gleich ausgebildet wie der entsprechende Flugzeugsitz aus dem ersten Ausführungsbeispiel. Der Flugzeugsitz 12c ist dabei tischfrei ausgebildet und weist eine Schnittstelle 16c auf, die der aus dem ersten Ausführungsbeispiel der Figuren 1 bis 4 entspricht.

Die Flugzeugsitzvorrichtung umfasst ein Ablage- und/oder Aufbewahrungselement 14c. Das Ablage- und/oder Aufbewahrungselement 14c ist getrennt von dem Flugzeugsitzelement 10c ausgebildet. Das Ablage- und/oder Aufbewahrungselement 14c ist als eine Haltevorrichtung ausgebildet. Das als Haltevorrichtung ausgebildete Ablage- und/oder Aufbewahrungselement 14c ist dazu vorgesehen, ein drittes Element, wie insbesondere ein PED, also einen Tablet PC, ein Smartphone oder Ähnliches, zu halten. Dabei ist das in dem als Haltevorrichtung ausgebildeten Ablage- und/oder Aufbewahrungselement 14c angeordnete dritte Element von einer Person, die auf einem entsprechenden Flugzeugsitz 12c sitzt, bedienbar. Zur Halterung des als PED ausgebildeten dritten Elements ist das als Haltevorrichtung ausgebildete Ablage- und/oder Aufbewahrungselement 14c als eine im Wesentlichen ebene Platte ausgebildet. An einem vorderen Ende, das in einem montierten Zustand dem Flugzeugsitzelement 10c abgewandt ist, weist das als Haltevorrichtung ausgebildete Ablage- und/oder Aufbewahrungselement 14c eine Vertiefung 74c auf. Im Bereich der Vertiefung 74c verläuft das als Haltevorrichtung ausgebildete Ablage- und/oder Aufbewahrungselement 14c zunächst nach unten und dann wieder nach oben. Die Vertiefung 74c ist V-förmig ausgebildet. Die Vertiefung 74c ist dazu vorgesehen, dass sich eine untere Seite des dritten Elements an einer Wandung 76c der Vertiefung 74c abstützen kann. Das als Haltevorrichtung ausgebildete Ablage- und/oder Aufbewahrungselement 14c umfasst weiter ein Abstützelement 78c. Das Abstützelement 78c ist schwenkbar an dem als Haltevorrichtung ausgebildeten Ablage- und/oder Aufbewahrungselement 14c angebracht. Das Abstützelement 78c ist als eine T-förmige flache Platte ausgebildet. Das Abstützelement 78c ist dabei mit einer schmalen Seite an dem als Haltevorrichtung ausgebildeten Ablage- und/oder Aufbewahrungselement 14c angeordnet. Das Abstützelement 78c ist dabei mit der schmalen Seite fest, aber schwenkbar mit dem als Haltevorrichtung ausgebildeten Ablage- und/oder Aufbewahrungselement 14c verbunden. Zur Verstauung des Abstützelements 78c weist das als Haltevorrichtung ausgebildete Ablage- und/oder Aufbewahrungselement 14c eine Ausnehmung 80c auf, die eine Kontur des Abstützelements 78c aufweist. Das Abstützelement 78c ist in einem nicht gebrauchten Betriebszustand in der Ausnehmung 80c angeordnet. Das Abstützelement 78c ist dazu vorgesehen, das in dem als Haltevorrichtung ausgebildeten Ablage- und/oder Aufbewahrungselement 14c gehaltene dritte Element an seiner dem Flugzeugsitz 12c zugewandten Seite abzustützen. Dabei ist das dritte Element, wie insbesondere der PED, mit einem unteren Ende in der Vertiefung 74c angeordnet und stützt sich dabei an der Wandung 76c der Vertiefung 74c ab und liegt mit seiner Rückseite, die dem Flugzeugsitzelement 10c zugewandt ist, an dem aufgestellten Abstützelement 78c an. Dadurch kann das dritte Element vorteilhaft schräg in dem als Haltevorrichtung ausgebildeten Ablage- und/oder Aufbewahrungselement 14c gehalten werden.

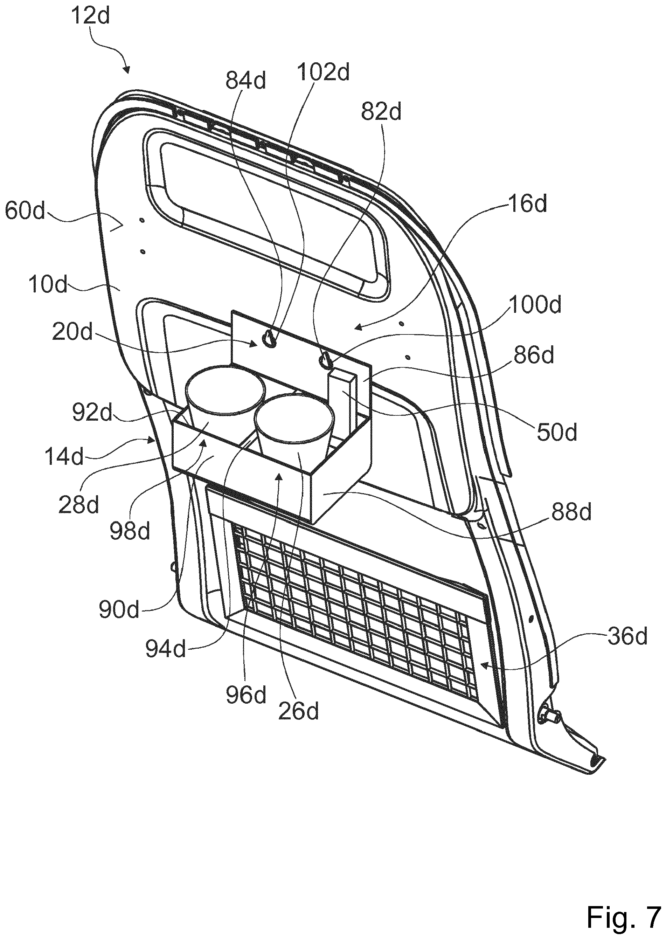

Figur 7 zeigt ein viertes Ausführungsbeispiel einer Flugzeugsitzvorrichtung. Die Flugzeugsitzvorrichtung umfasst einen Flugzeugsitz 12d und ein Flugzeugsitzelement 10d. Das Flugzeugsitzelement 10d bildet einen Teil des Flugzeugsitzes 12d aus. Das Flugzeugsitzelement 10d ist dabei als eine Rückenlehne ausgebildet. Der Flugzeugsitz 12d ist im Wesentlichen gleich ausgebildet wie der entsprechende Flugzeugsitz aus den vorherigen Ausführungsbeispielen. An einer Rückseite 60d des als Rückenlehne ausgebildeten Flugzeugsitzelements 10d ist in einem unteren Bereich ein Literaturnetz 36d angeordnet. Grundsätzlich ist es auch denkbar, dass an der Rückseite 60d des als Rückenlehne ausgebildeten Flugzeugsitzelements 10d eine hohe Literaturtasche oder andere Elemente, wie ein Bildschirm oder eine Haltevorrichtung für Werbung, angeordnet sind. Der Flugzeugsitz 12d ist dabei tischfrei ausgebildet. Das Flugzeugsitzelement 10d weist eine Schnittstelle 16d auf, die sich von der aus den vorherigen Ausführungsbeispielen unterscheidet. Die Schnittstelle 16d weist ein erstes Formschlusselement 82d und ein zweites Formschlusselement 84d auf. Die Formschlusselemente 82d, 84d sind als Haken ausgebildet, die sich von einer Rückseite 60d des als Rückenlehne ausgebildeten Flugzeugsitzelements 10d wegerstrecken. Die als Haken ausgebildeten Formschlusselemente 82d, 84d weisen dabei an einem dem Flugzeugsitzelement 10d abgewandten Ende eine Erhebung nach oben auf, die von einer Aufständerebene, auf der der Flugzeugsitz 12d aufgeständert ist, weggerichtet ist. Dabei ist es denkbar, dass die Formschlusselemente 82d, 84d in der Schnittstelle 16d des Flugzeugsitzelements 10d in einer Verstaustellung in dem Flugzeugsitzelement 10d versenkbar sind. Dazu könnte das Flugzeugsitzelement 10d Aufnahmen aufweisen, in denen die Formschlusselemente 82d, 84d federbelastet eingebracht sind und in der Verstaustellung und in einer Gebrauchsstellung arretierbar sind.

Die Flugzeugsitzvorrichtung umfasst ein Ablage- und/oder Aufbewahrungselement 14d. Das Ablage- und/oder Aufbewahrungselement 14d ist getrennt von dem Flugzeugsitzelement 10d ausgebildet. Das Ablage- und/oder Aufbewahrungselement 14d ist bei Bedarf an das Flugzeugsitzelement 10d anbindbar. Das Ablage- und/oder Aufbewahrungselement 14d ist als ein Servierelement ausgebildet. Das Ablage- und/oder Aufbewahrungselement 14d ist aus einem Zellstoff gebildet. Dabei ist das Ablage- und/oder Aufbewahrungselement 14d aus einem Papier oder aus Pappe gebildet. Das Ablage- und/oder Aufbewahrungselement 14d ist als eine Box ausgebildet. Das Ablage- und/oder Aufbewahrungselement 14d weist einen nicht näher dargestellten Boden auf, der eine rechteckige Grundform aufweist. Der Boden ist an seinen Außenkanten von Außenwandungen 86d, 88d, 90d, 92d begrenzt. Die Außenwandung 86d, die in einem an dem Flugzeugsitzelement 10d angebrachten Zustand dem Flugzeugsitzelement 10d zugewandt ist, ist dabei höher als die restlichen Außenwandungen 88d, 90d, 92d. Das Ablage- und/oder Aufbewahrungselement 14d weist eine Zwischenwandung 94d auf, die das als Box ausgebildete Ablage- und/oder Aufbewahrungselement 14d in zwei gleich große, voneinander getrennte Teilbereiche 96d, 98d aufteilt. In den Teilbereichen 96d, 98d kann jeweils ein Getränkegefäß 26d, 28d und/oder ein Snack 50d angeordnet werden. Das Ablage- und/oder Aufbewahrungselement 14d umfasst eine Schnittstelle 20d, über die das Ablage- und/oder Aufbewahrungselement 14d an das Flugzeugsitzelement 10d anbindbar ist. Die Schnittstelle 20d umfasst zwei Formschlusselemente 100d, 102d, die als Durchgangslöcher ausgebildet sind. Die als Durchgangslöcher ausgebildeten Formschlusselemente 100d, 102d sind in dem an dem Flugzeugsitzelement 10d angebrachten Zustand in die dem Flugzeugsitzelement 10d zugewandte höher ausgebildete Außenwandung 86d eingebracht. Die als Durchgangslöcher ausgebildeten Formschlusselemente 100d, 102d sind dabei an einem oberen Ende der Außenwandung 86d angeordnet. Zur Anbindung des Ablage- und/oder Aufbewahrungselements 14d an den Flugzeugsitz 12d werden die als Durchgangslöcher ausgebildeten Formschlusselemente 100d, 102d über die als Haken ausgebildeten Formschlusselemente 82d, 84d der Schnittstelle 16d des Flugzeugsitzelements 10d geführt, sodass die als Haken ausgebildeten Formschlusselemente 82d, 84d in die als Durchgangslöcher ausgebildeten Formschlusselemente 100d, 102d eingreifen. Grundsätzlich wäre es auch denkbar, dass die Formschlusselemente 82d, 84d der Schnittstelle 16d des Flugzeugsitzelements 10d als Vertiefungen ausgebildet sind, in die die Formschlusselemente 100d, 102d der Schnittstelle 20d des Ablage- und/oder Aufbewahrungselements 14d, die als Erhebungen ausgebildet sind, die sich von der Außenwandung 86d in Richtung des Flugzeugsitzelements 10d erstrecken, formschlüssig eingreifen. Das aus Zellstoff gebildete Ablage- und/oder Aufbewahrungselement 14d ist dabei gefaltet. In einem ungefalteten Zustand ist das Ablage- und/oder Aufbewahrungselement 14d flach ausgebildet und kann einfach und platzsparend gelagert werden. Zum Gebrauch kann das Ablage- und/oder Aufbewahrungselement 14d einfach aufgeklappt werden, sodass die Außenwandungen 86d, 88d, 90d, 92d den Boden begrenzen. Dieser Faltvorgang kann einfach und schnell von einem Crewmitglied während eines Serviervorgangs vorgenommen werden.

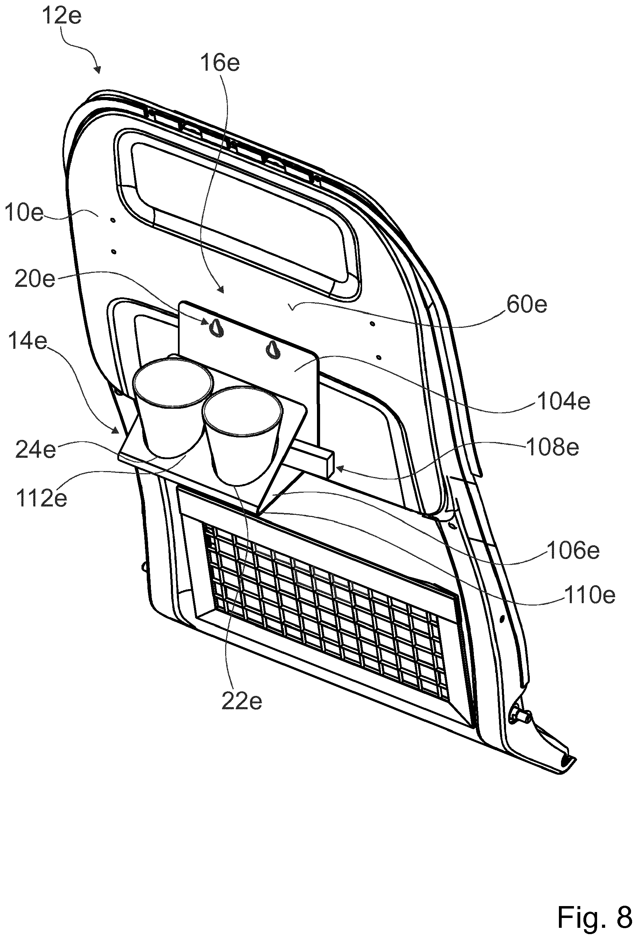

Figur 8 zeigt ein fünftes Ausführungsbeispiel einer Flugzeugsitzvorrichtung. Die Flugzeugsitzvorrichtung umfasst einen Flugzeugsitz 12e und ein Flugzeugsitzelement 10e. Das Flugzeugsitzelement 10e bildet einen Teil des Flugzeugsitzes 12e aus. Das Flugzeugsitzelement 10e ist dabei als eine Rückenlehne ausgebildet. Der Flugzeugsitz 12e ist im Wesentlichen gleich ausgebildet wie der entsprechende Flugzeugsitz aus dem vierten Ausführungsbeispiel. Der Flugzeugsitz 12e ist dabei tischfrei ausgebildet. Das Flugzeugsitzelement 10e weist eine Schnittstelle 16e auf, die der aus dem vierten Ausführungsbeispiel aus der Figur 7 entspricht.

Die Flugzeugsitzvorrichtung umfasst ein Ablage- und/oder Aufbewahrungselement 14e. Das Ablage- und/oder Aufbewahrungselement 14e ist getrennt von dem Flugzeugsitzelement 10e ausgebildet. Das Ablage- und/oder Aufbewahrungselement 14e ist bei Bedarf an das Flugzeugsitzelement 10e anbindbar. Das Ablage- und/oder Aufbewahrungselement 14e ist als ein Servierelement ausgebildet. Das Ablage- und/oder Aufbewahrungselement 14e ist aus einem Zellstoff gebildet. Dabei ist das Ablage- und/oder Aufbewahrungselement 14e aus einem Papier oder aus Pappe gebildet. Das Ablage- und/oder Aufbewahrungselement 14e weist eine Rückwandung 104e auf, die in einem an dem Flugzeugsitzelement 10e angebundenen Zustand dem Flugzeugsitzelement 10e zugewandt ist und zumindest teilweise an diesem anliegt. Das Ablage- und/oder Aufbewahrungselement 14e umfasst eine Schnittstelle 20e, die in die Rückwandung 104e eingebracht ist und äquivalent zu der Schnittstelle aus dem vierten Ausführungsbeispiel ausgebildet ist. An einem unteren Ende der Rückwandung 104e weist das Ablage- und/oder Aufbewahrungselement 14e einen 90-Grad-Knick auf und geht in eine Bodenplatte 106e über. Die Bodenplatte 106e erstreckt sich von einem hinteren Ende 108e, an dem sie mit der Rückwandung 104e verbunden ist, in einem an dem Flugzeugsitzelement 10e angebundenen Zustand von dem Flugzeugsitzelement 10e und der Rückwandung 104e weg bis an ein vorderes Ende 110e des Ablage- und/oder Aufbewahrungselements 14e. An seinem vorderen Ende 110e weist das Ablage- und/oder Aufbewahrungselement 14e einen Knick von etwa 45 Grad auf. Von dem 45-Grad-Knick aus erstreckt sich eine Halteplatte 112e nach oben in Richtung der Schnittstelle 20e des Ablage- und/oder Aufbewahrungselements 14e. In die Halteplatte 112e sind zwei Aufnahmen 22e, 24e eingebracht. Die Aufnahmen 22e, 24e sind dazu vorgesehen, dass Getränkegefäße 26e, 28e, wie insbesondere Becher, in ihnen angeordnet werden können. Die Aufnahmen 22e, 24e sind dabei elliptisch in die schräg angeordnete Halteplatte 112e eingebracht. Auf der Bodenplatte 106e können, wie in Figur 8 zu sehen, hinter den beiden in den Aufnahmen 22e, 24e angeordneten Getränkegefäßen 26e, 28e Snacks 50e oder andere Elemente platziert werden.

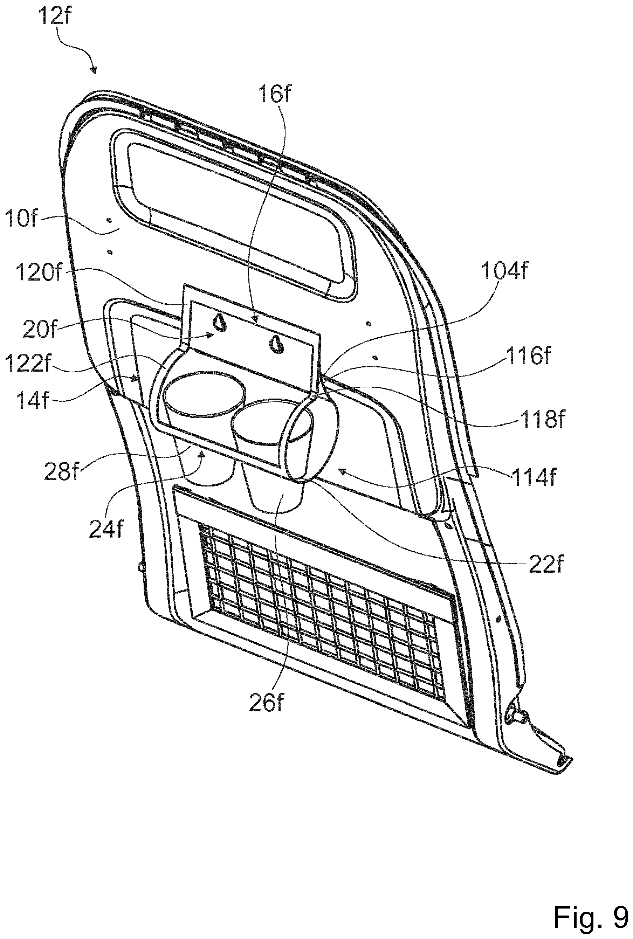

Figur 9 zeigt ein sechstes Ausführungsbeispiel einer Flugzeugsitzvorrichtung. Die Flugzeugsitzvorrichtung umfasst einen Flugzeugsitz 12f und ein Flugzeugsitzelement 10f. Das Flugzeugsitzelement 10f bildet einen Teil des Flugzeugsitzes 12f aus. Das Flugzeugsitzelement 10f ist dabei als eine Rückenlehne ausgebildet. Der Flugzeugsitz 12f ist im Wesentlichen gleich ausgebildet wie der entsprechende Flugzeugsitz aus dem vierten Ausführungsbeispiel. Der Flugzeugsitz 12f ist dabei tischfrei ausgebildet. Das Flugzeugsitzelement 10f weist eine Schnittstelle 16f auf, die der aus dem vierten und fünften Ausführungsbeispiel aus den Figuren 7 und 8 entspricht.

Die Flugzeugsitzvorrichtung umfasst ein Ablage- und/oder Aufbewahrungselement 14f. Das Ablage- und/oder Aufbewahrungselement 14f ist getrennt von dem Flugzeugsitzelement 10f ausgebildet. Das Ablage- und/oder Aufbewahrungselement 14f ist bei Bedarf an das Flugzeugsitzelement 10f anbindbar. Das Ablage- und/oder Aufbewahrungselement 14f ist als ein Servierelement ausgebildet. Das Ablage- und/oder Aufbewahrungselement 14f ist aus einem Kunststoff gebildet. Das Ablage- und/oder Aufbewahrungselement 14f weist eine Rückwandung 104f auf, in der eine Schnittstelle 20f des Ablage- und/oder Aufbewahrungselements 14f angeordnet ist. Die Schnittstelle 20f ist dabei identisch zu den Schnittstellen des vierten und fünften Ausführungsbeispiels ausgebildet. An einem unteren Ende der Rückwandung 104f umfasst das Ablage- und/oder Aufbewahrungselement 14f einen rohrförmigen Bereich 114f. Ein erstes Ende 116f des rohrförmigen Bereichs 114f schließt einstückig an die Rückwandung 104f an. Der rohrförmige Bereich 114f bildet in etwa 360 Grad aus und ein zweites Ende 118f des rohrförmigen Bereichs 114f ist wieder dem ersten Ende 116f und damit der Rückwandung 104f zugewandt. An dem zweiten Ende 118f des rohrförmigen Bereichs 114f schließt ein Anbindungsbereich 120f an, der fest mit der Rückwandung 104f verbunden ist. Dabei ist der Anbindungsbereich 120f mit der Rückwandung 104f verklebt. Grundsätzlich sind hier natürlich auch andere Verbindungsarten denkbar. An einer unteren Fläche des rohrförmigen Bereichs 114f weist das Ablage- und/oder Aufbewahrungselement 14f zwei beabstandet zueinander angeordnete Aufnahmen 22f, 24f auf. Die Aufnahmen 22f, 24f sind jeweils dazu vorgesehen, dass ein Getränkegefäß 26f, 28f darin angeordnet werden kann. In einem Bereich über den Aufnahmen 22f, 24f ist eine Durchgangsöffnung 122f in dem rohrförmigen Bereich 114f und Teilen des Anbindungsbereichs 120f angeordnet, durch die die Getränkegefäße 26f, 28f von oben in den rohrförmigen Bereich 114f und dann in die darin angeordneten Aufnahmen 22f, 24f eingeführt werden können.

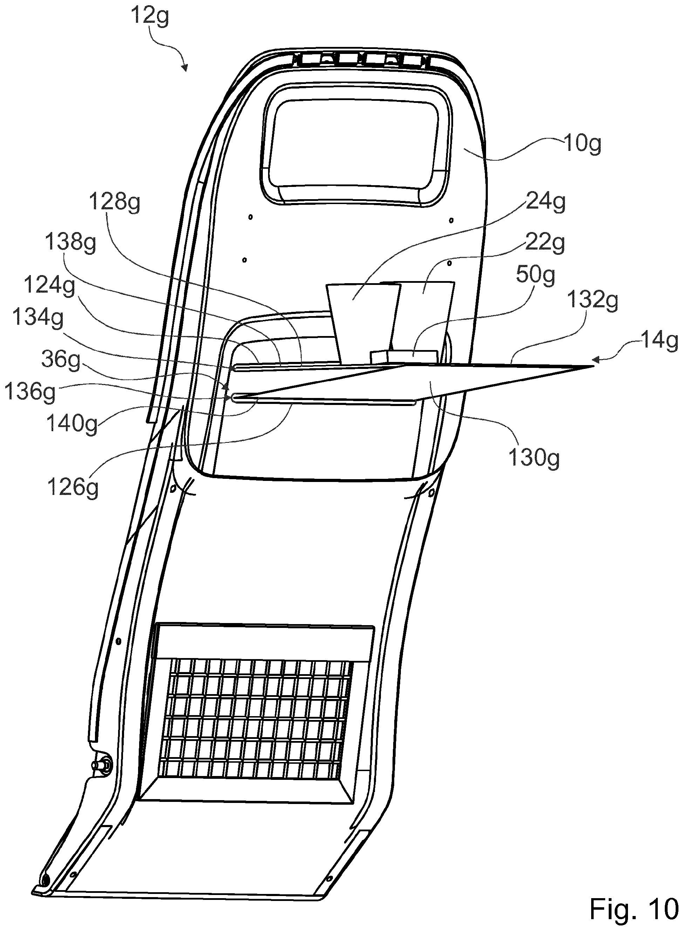

Figur 10 zeigt ein siebtes Ausführungsbeispiel einer Flugzeugsitzvorrichtung. Die Flugzeugsitzvorrichtung umfasst einen Flugzeugsitz 12g und ein Flugzeugsitzelement 10g. Das Flugzeugsitzelement 10g bildet einen Teil des Flugzeugsitzes 12g aus. Das Flugzeugsitzelement 10g ist dabei als eine Rückenlehne ausgebildet. Der Flugzeugsitz 12g ist im Wesentlichen gleich ausgebildet wie der entsprechende Flugzeugsitz aus dem vierten Ausführungsbeispiel. Der Flugzeugsitz 12g ist dabei tischfrei ausgebildet. Das Flugzeugsitzelement 10g weist eine Schnittstelle 16g auf. Die Schnittstelle 16g ist unterschiedlich zu den vorhergehenden Ausführungsbeispielen ausgebildet. Die Schnittstelle 16g umfasst zwei parallel zueinander angeordnete Formschlusselemente 124g, 126g, die als Schlitze ausgebildet sind.

Die Flugzeugsitzvorrichtung umfasst ein Ablage- und/oder Aufbewahrungselement 14g. Das Ablage- und/oder Aufbewahrungselement 14g ist getrennt von dem Flugzeugsitzelement 10g ausgebildet. Das Ablage- und/oder Aufbewahrungselement 14g ist bei Bedarf an das Flugzeugsitzelement 10g anbindbar. Das Ablage- und/oder Aufbewahrungselement 14g ist als ein Servierelement ausgebildet. Das Ablage- und/oder Aufbewahrungselement 14g ist aus einem Zellstoff gebildet. Das Ablage- und/oder Aufbewahrungselement 14g umfasst eine Tischplatte 128g und ein Abstützelement 130g. An einem vorderen Ende 132g sind die Tischplatte 128g und das Abstützelement 130g miteinander verbunden. Dabei sind die Tischplatte 128g und das Abstützelement 130g einstückig miteinander ausgebildet. Das Abstützelement 130g erstreckt sich von dem vorderen Ende 132g, an dem es mit der Tischplatte 128g verbunden ist, in einem Winkel kleiner 10 Grad in etwa in die gleiche Richtung wie die Tischplatte 128g. Die Tischplatte 128g und das Abstützelement 130g weisen jeweils ein Formschlusselement 134g, 136g einer Schnittstelle 20g des Ablage- und/oder Aufbewahrungselements 14g auf. Die Formschlusselemente 134g, 136g sind jeweils an einem zweiten Ende 138g, 140g der Tischplatte 128g und des Abstützelements 130g, das dem vorderen Ende 132g abgewandt ist, angebracht. Die Formschlusselemente 134g, 136g sind von den zweiten Enden 138g, 140g gebildet. Die Formschlusselemente 134g, 136g des Ablage- und/oder Aufbewahrungselements 14g sind in die als Schlitze ausgebildeten Formschlusselemente 124g, 126g der Schnittstelle 16g des Flugzeugsitzelements 10g eingeführt und form- und/oder kraftschlüssig mit diesen verbunden. Dabei ist es denkbar, dass die zweiten Enden 138g, 140g der Tischplatte 128g und des Abstützelements 130g zur Ausbildung als Formschlusselement 124g, 126g jeweils durch eine Beschichtung verstärkt sind. Grundsätzlich ist es auch denkbar, dass das Ablage- und/oder Aufbewahrungselement 14g weitere abbiegbare Laschen umfasst, die zur Stabilisierung und zur besseren Kraftübertragung in einem montierten Zustand des Ablage- und/oder Aufbewahrungselements 14g ausgeklappt werden können und beispielsweise die Tischplatte 128g und das Abstützelement 130g an weiteren Stellen miteinander koppeln. In einem unmontierten Zustand können die Tischplatte 128g und das Abstützelement 130g zur besseren Verstaubarkeit aneinander geklappt werden. Dadurch kann das Ablage- und/oder Aufbewahrungselement 14g besonders platzsparend aufbewahrt werden. Zur Montage an dem Flugzeugsitzelement 10g wird das Abstützelement 130g von der Tischplatte 128g so weit weggeklappt, dass sowohl das Formschlusselement 134g der Tischplatte 128g als auch das Formschlusselement 136g des Abstützelements 130g in das entsprechende Formschlusselement 124g, 126g der Schnittstelle 16g des Flugzeugsitzelements 10g eingeführt werden können. Sowohl das Formschlusselement 134g der Tischplatte 128g als auch das Formschlusselement 136g des Abstützelements 130g werden in das entsprechende Formschlusselement 124g, 126g der Schnittstelle 16g des Flugzeugsitzelements 10g eingeschoben und/oder eingeklemmt. Kräfte, die durch auf der Tischplatte 128g abgestellte Getränkegefäße 26g, 28g, Snacks 50g oder andere Elemente auf die Tischplatte 128g wirken, werden über das Abstützelement 130g in das Flugzeugsitzelement 10g eingeleitet.

### Bezugszeichen

- 10: Flugzeugsitzelement
- 12: Flugzeugsitz
- 14: Ablage- und/oder Aufbewahrungselement
- 16: Schnittstelle
- 18: Kraft- und/oder Formschlusselement
- 20: Schnittstelle
- 22: Aufnahme
- 24: Aufnahme
- 26: Getränkegefäß
- 28: Getränkegefäß
- 30: Unterseite
- 32: Oberseite
- 34: Ausgleichsvorrichtung
- 36: Literaturnetz
- 38: Seitenkante
- 40: Seitenkante
- 42: Vorderkante
- 44: Hinterkante
- 46: Außenwandung
- 48: Außenwandung
- 50: Snack
- 52: Mulde
- 54: Erhebung
- 56: weiteres Ablage- und/oder Aufbewahrungselement
- 58: Kraft- und/oder Formschlusselement
- 60: Rückseite
- 62: Transport- und Serviervorrichtung
- 64: Aufnahmevorrichtung
- 66: Seitenwand
- 68: Aufnahme
- 70: Ablagefläche
- 72: Druckbereich
- 74: Vertiefung
- 76: Wandung
- 78: Abstützelement
- 80: Ausnehmung
- 82: Formschlusselement
- 84: Formschlusselement
- 86: Außenwandung
- 88: Außenwandung
- 90: Außenwandung
- 92: Außenwandung
- 94: Zwischenwandung
- 96: Teilbereich
- 98: Teilbereich
- 100: Formschlusselement
- 102: Formschlusselement
- 104: Rückwandung
- 106: Bodenplatte
- 108: hinteres Ende
- 110: vorderes Ende
- 112: Halteplatte
- 114: rohrförmiger Bereich
- 116: erstes Ende
- 118: zweites Ende
- 120: Anbindungsbereich
- 122: Durchgangsöffnung
- 124: Formschlusselement
- 126: Formschlusselement
- 128: Tischplatte
- 130: Abstützelement
- 132: vorderes Ende
- 134: Formschlusselement
- 136: Formschlusselement
- 138: zweites Ende
- 140: zweites Ende
- 142: Fixierelement
- 144: Fixierelement
- 146: vordere Wandung
- 148: Hinterschnitt
- 150: obere Wandung
- 152: Aufnahme
- 154: Aufnahme

## Patentansprüche

1. Flugzeugsitzvorrichtung mit zumindest einem als eine Rückenlehne ausgebildeten Flugzeugsitzelement (10a; 10b), das zumindest einen Teil eines tischfreien Flugzeugsitzes (12a; 12b) ausbildet, mit zumindest einem getrennt von dem Flugzeugsitzelement (10a; 10b) ausgebildeten Ablage- und/oder Aufbewahrungselement (14a; 14b), wobei das Flugzeugsitzelement (10a; 10b) zumindest eine Schnittstelle (16a; 16b) aufweist, über die das Ablage- und/oder Aufbewahrungselement (14a; 14b) bei Bedarf an das Flugzeugsitzelement (10a; 10b) anbindbar ist, wobei das Ablage- und/oder Aufbewahrungselement (14a; 14b) als ein Servierelement ausgebildet ist, das eine rechteckige, vieleckige, runde oder ovale flache Platte ausbildet; **dadurch gekennzeichnet, dass** die flache Platte eine Unterseite (30a; 30b) und eine Oberseite (32a; 32b) aufweist, die derart korrespondierend zueinander ausgebildet sind, dass das Ablage- und/oder Aufbewahrungselement (14a, 14b) dazu vorgesehen ist, zur Aufbewahrung platzsparend gestapelt zu werden.

2. Flugzeugsitzvorrichtung nach Anspruch 1, **dadurch gekennzeichnet, dass** die Schnittstelle (16a; 16b) zumindest ein Kraft- und/oder Formschlusselement (18a; 18b) umfasst, über welches das Ablage- und/oder Aufbewahrungselement (14a; 14b) an das Flugzeugsitzelement (10a; 10b) anbindbar ist.

3. Flugzeugsitzvorrichtung nach Anspruch 2, **dadurch gekennzeichnet, dass** das Kraft-und/oder Formschlusselement (18a; 18b) der Schnittstelle (16a; 16b) als eine Ausnehmung ausgebildet ist, in die das Ablage- und/oder Aufbewahrungselement (14a; 14b) einsteckbar ist.

4. Flugzeugsitzvorrichtung nach einem der vorhergehenden Ansprüche, **dadurch gekennzeichnet, dass** das Ablage- und/oder Aufbewahrungselement (14a; 14b) dazu vorgesehen ist, werkzeugfrei an dem Flugzeugsitzelement (10a; 10b) montiert zu werden.

5. Flugzeugsitzvorrichtung zumindest nach Anspruch 3, **dadurch gekennzeichnet, dass** das Ablage- und/oder Aufbewahrungselement (14a; 14b) zumindest eine Schnittstelle (20a; 20b) aufweist, die mit der Schnittstelle (16a; 16b) des Flugzeugsitzelements (10a; 10b) koppelbar ist.

6. Flugzeugsitzvorrichtung nach einem der vorhergehenden Ansprüche, **dadurch gekennzeichnet, dass** das Ablage- und/oder Aufbewahrungselement (14a; 14b) zumindest eine Aufnahme (22a, 24a; 22b) für ein Getränkegefäß (26a, 28a; 26b) aufweist.

7. Flugzeugsitzvorrichtung nach einem der vorhergehenden Ansprüche, **dadurch gekennzeichnet, dass** das Ablage- und/oder Aufbewahrungselement (14a; 14b) zumindest im Wesentlichen aus einem Kunst- und/oder Zellstoff hergestellt ist.

8. Flugzeugsitzvorrichtung nach einem der vorhergehenden Ansprüche, **dadurch gekennzeichnet, dass die** Schnittstelle (16a) des Flugzeugsitzelements (10a) zumindest eine Ausgleichsvorrichtung (34a) umfasst, die dazu vorgesehen ist, das Ablage- und/oder Aufbewahrungselement (14a) zumindest teilweise bewegungstechnisch von dem Flugzeugsitzelement (10a) zu entkoppeln.

## Claims

1. Aircraft seat device with at least one aircraft seat element (10a; 10b) embodied as a backrest, which implements at least a portion of a table-free aircraft seat (12a; 12b), with at least one deposit and/or storage element (14a; 14b) embodied separately from the aircraft seat element (10a; 10b),
wherein the aircraft seat element comprises at least one interface (16a; 16b) via which the deposit and/or storage element (14a; 14b) is connectable to the aircraft seat element (10a; 10b) on requirement,
wherein the deposit and/or storage element (14a; 14b) is embodied as a serving element forming a rectangular, polygonal, round or oval planar plate;
**characterised in that**
the planar plate comprises an underside (30a; 30b) and an upper side (32a; 32b) which are implemented corresponding to each other in such a way that the deposit and/or storage element (14a; 14b) is configured to be stacked for storage in a space-saving fashion.

2. Aircraft seat device according to claim 1, **characterised in that** the interface (16a; 16b) comprises at least one force-fit and/or form-fit element (18a; 18b), via which the deposit and/or storage element (14a; 14b) is connectable to the aircraft seat element (10a; 10b).

3. Aircraft seat device according to claim 2, **characterised in that** the force-fit and form-fit element (18a; 18b) of the interface (16a; 16b) is embodied as a recess, which the deposit and/or storage element (14a; 14b) is insertable into.

4. Aircraft seat device according to one of the preceding claims, **characterised in that** the deposit and/or storage element (14a; 14b) is configured to be mounted to the aircraft seat element (10a; 10b) toollessly.

5. Aircraft seat device at least according to claim 3, **characterised in that** the deposit and/or storage element (14a; 14b) comprises at least one interface (20a; 20b), which is couplable with the interface (16a; 16b) of the aircraft seat element (10a; 10b).

6. Aircraft seat device according to one of the preceding claims, **characterised in that** the deposit and/or storage element (14a; 14b) comprises at least one receptacle (22a, 24a; 22b) for a drink container (26a, 28a; 26b).

7. Aircraft seat device according to one of the preceding claims, **characterised in that** the deposit and/or storage element (14a; 14b) is at least substantially made of a synthetic material and/or cellulose material.

8. Aircraft seat device according to one of the preceding claims, **characterised in that** the interface (16a) of the aircraft seat element (10a) comprises at least one compensation device (34a), which is configured for at least partly decoupling, motion-technically, the deposit and/or storage element (14a; 14b) from the aircraft seat element (10a).

## Revendications

1. Dispositif de siège d'avion avec au moins un élément de siège d'avion (10a ; 10b) implémenté comme dossier, qui forme au moins une portion d'un siège d'avion sans table (12a ; 12b), avec au moins un élément de dépôt et/ou de rangement (14a ; 14b) implémenté séparément de l'élément de siège d'avion (10a ; 10b), selon lequel l'élément de siège d'avion (10a ; 10b) comporte au moins une interface (16a ; 16b) qui permet si nécessaire une connexion de l'élément de dépôt et/ou de rangement (14a ; 14b) à l'élément de siège d'avion (10a ; 10b), selon lequel l'élément de dépôt et/ou de rangement (14a ; 14b) est implémenté pour être un élément de service formé d'une plaque planaire rectangulaire, polygonale, ronde ou ovale ; **caractérisé en ce que** la plaque planaire comporte un côté inférieur (30a ; 30b) et un côté supérieur (32a ; 32b), formés de telle manière qu'ils sont complémentaires entre eux, et que l'élément de dépôt et/ou de rangement (14a ; 14b) est prévu à être empilé pour un stockage de manière peu encombrant.

2. Dispositif de siège d'avion selon la revendication 1, **caractérisé en ce que** l'interface (16a ; 16b) comporte au moins un élément de liaison par force et/ou par forme (18a ; 18b), par lequel l'élément de dépôt et/ou de rangement (14a ; 14b) est connectable à l'élément de siège d'avion (10a ; 10b).

3. Dispositif de siège d'avion selon la revendication 2, **caractérisé en ce que** l'élément de liaison par force et/ou par forme (18a ; 18b) de l'interface (16a ; 16b) est implémenté comme une échancrure, dans laquelle l'élément de dépôt et/ou de rangement (14a ; 14b) est enfichable.

4. Dispositif de siège d'avion selon l'une quelconque des revendications précédentes, **caractérisé en ce que** l'élément de dépôt et/ou de rangement (14a ; 14b) est prévu pour être monté sans outil à l'élément de siège d'avion (10a ; 10b).

5. Dispositif de siège d'avion au moins selon la revendication 3, **caractérisé en ce que** l'élément de dépôt et/ou de rangement (14a ; 14b) présente au moins une interface (20a ; 20b) qui est couplable avec l'interface (16a ; 16b) de l'élément de siège d'avion (10a ; 10b).

6. Dispositif de siège d'avion selon l'une quelconque des revendications précédentes, **caractérisé en ce que** l'élément de dépôt et/ou de rangement (14a ; 14b) présente au moins un réceptacle (22a, 24a ; 22b) pour un récipient à boissons (26a, 28a ; 26b).

7. Dispositif de siège d'avion selon l'une quelconque des revendications précédentes, **caractérisé en ce que** l'élément de dépôt et/ou de rangement (14a ; 14b) est fabriqué au moins essentiellement d'une matière plastique et/ou cellulose.

8. Dispositif de siège d'avion selon l'une quelconque des revendications précédentes, **caractérisé en ce que** l'interface (16a) de l'élément de siège d'avion (10a) comporte un dispositif de compensation (34a), lequel est prévu pour au moins partiellement découpler, mécaniquement, l'élément de dépôt et/ou de rangement (14a ; 14b) de l'élément de siège d'avion (10a).
